Europäisches Patentamt

European Patent Office

Office européen des brevets

(19)

(11) EP 0 613 077 B1

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int Cl.6: **G06F 1/24**, G06F 11/00

(21) Anmeldenummer: **93101068.0**

(22) Anmeldetag: **25.01.1993**

(54) **Verfahren zur Reset-Erzeugung in Datenverarbeitungsanlagen**

Method for generating a reset signal in a data processing system

Procédé pour générer un signal de remise à zéro dans un système de traitement de données

(84) Benannte Vertragsstaaten:
**DE FR IT SE**

(43) Veröffentlichungstag der Anmeldung:
**31.08.1994 Patentblatt 1994/35**

(73) Patentinhaber: **SIEMENS AKTIENGESELLSCHAFT**
**D-80333 München (DE)**

(72) Erfinder:
- **Wolfschmitt, Willy, Dipl.-Ing. (FH)**
  **W-8729 Eltmann (DE)**
- **Ebert, Rainer, Dipl.-Ing.**
  **O-9043 Chemnitz (DE)**

(56) Entgegenhaltungen:
WO-A-85/02475          FR-A- 2 638 867
GB-A- 2 133 909

- **PATENT ABSTRACTS OF JAPAN vol. 012, no. 396 (P-774)21. Oktober 1988**

**Beschreibung**

Dynamische Schreib-Lesespeicher weisen gegenüber anderen Speichertypen eine höhere Integrationsdichte und ein günstigeres Preis-Leistungsverhältnis auf. Diesen Vorteilen steht der Nachteil gegenüber, daß bei Vorliegen eines Reset-Signals in der Datenverarbeitungsanlage oder fehlendem DRAM-Refresh-Signal der gesamte Speicherinhalt eines dynamischen Schreib-Lesespeichers verloren geht, so daß dieser Speicher wieder völlig neu beschrieben werden muß. Geänderte Daten müssen dabei auf Festwertspeichern gerettet werden. Bei großen Datenmengen, wie sie insbesondere auch in numerischen Steuerungen vorkommen, wird für die Neubeschreibung des Speichers viel Zeit benötigt, die in der Regel dann nicht zur Verfügung steht, wenn das Reset-Signal lediglich durch einen Wechsel des Betriebsmodus oder durch einen Software-Reset ausgelöst wurde. Bei einem wegen Spannungsausfall bedingten Reset fällt der Nachteil des Datenverlustes nicht so sehr ins Gewicht, da dann sowieso ein Neustart der Datenverarbeitungsanlage oder der numerischen Steuerung durchgeführt werden muß.

Aus WO-A-85/02475 ist ein Verfahren bekannt, das erkennt, ob ein Reset-Signal vorliegt, das nicht durch einen Spannungsausfall verursacht wurde. Dabei wird ein in einem flüchtigen Speicher abgelegtes Muster mit einem bekannten Muster verglichen. Aus fehlender oder vorhandener Übereinstimmung wird geschlossen, ob ein Power-On Reset vorlag oder nicht.

Ein Problem dieses Verfahrens ist, daß das aus dem flüchtigen Speicher gelesene Muster auch beim Power-On Reset zufälligerweise mit dem bekannten Muster übereinstimmen kann, obwohl der flüchtige Speicher nicht richtig initialisiert ist.

Aufgabe der Erfindung ist daher, einen zuverlässigen Mustervergleich beim Vorliegen eines Reset-Signals zu gewährleisten. Diese Aufgabe wird durch die Merkmale des Hauptanspruchs gelöst.

Nach einer vorteilhaften Ausbildung der Erfindung kann während des Ladevorgangs überprüft werden, ob die Daten vollständig in den dynamischen Schreib-Lesespeicher eingeschrieben wurden, oder ob während des Ladevorgangs ein Reset-Signal vorlag und dieser dadurch nicht vollständig durchgeführt wurde.

Ein Ausführungsbeispiel der Erfindung ist nachstehend unter Bezugnahme auf die Zeichnungen beschrieben. Dabei zeigen:

FIG 1     ein Blockschaltbild mit Elementen einer Datenverarbeitungsanlage,

FIG 2     das Blockschaltbild einer Vorrichtung zur Ausführung des Verfahrens,

FIG 3     einen Signallaufplan.

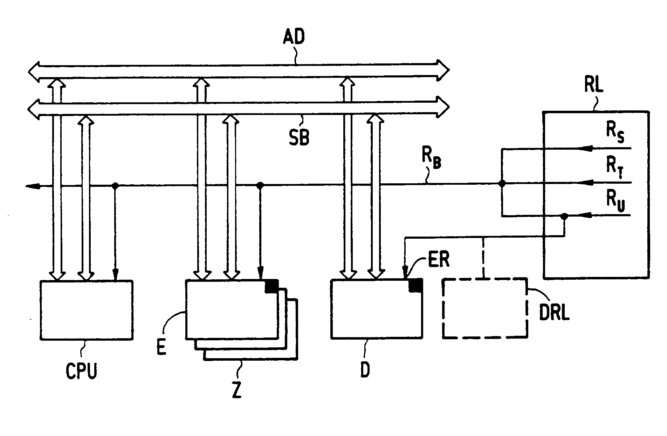

FIG 1 zeigt einen Ausschnitt aus einer Datenverarbeitungsanlage mit einem Adreß- und Datenbus AD, einem Steuerbus SB, wobei die Bus-Resetleitung $R_B$ gesondert dargestellt ist. An die Busleitungen AD/SB ist eine Zentralprozessoreinheit CPU, Zusatzhardware Z (bestehend aus mindestens einem Festwertspeicher E und optional Timer, Interruptcontroller, etc.) sowie eine dynamische Schreib-Lesespeichervorrichtung D angeschlossen. Die Prozessoreinheit CPU und die Zusatzhardware sind mit der Bus-Resetleitung $R_B$ verbunden. Desweiteren ist eine zentrale Resetlogik RL vorgesehen, in der Reset-Signale erzeugt werden, die verschiedene Ursachen haben. So wird beispielsweise bei einem Software-Reset das Reset-Signal $R_S$ ausgelöst, bei einem Wechsel des Betriebsmodus, der beispielsweise durch Tastendruck ausgelöst werden kann, wird das Reset-Signal $R_T$ erzeugt; und beim Einschalten der Spannungsversorgung oder bei Wiedereinsetzen der Spannungsversorgung nach einer Spannungsunterbrechung wird das Reset-Signal $R_U$ generiert.

Sämtliche Reset-Signale $R_S$, $R_T$, $R_U$ werden auf die Bus-Resetleitung $R_B$ geführt, so daß die Prozessoreinheit und die Zusatzhardware Z bei jedem Reset-Signal zurückgesetzt werden. Der Reset-Eingang ER des dynamischen Schreib-Lesespeichers ist jedoch nicht an die Bus-Resetleitung $R_B$ angeschlossen, sondern wird lediglich mit dem Reset-Signal $R_U$ beaufschlagt. Dies führt dazu, daß dieser Speicher nicht zurückgesetzt wird wenn ein Software-Reset oder ein durch Betriebsmoduswechsel bedingter Reset vorliegt.

Da bei herkömmlichen Datenverarbeitungsanlagen bereits eine zentrale Reset-Logik RL vorhanden ist, die das Summen-signal $R_B$ generiert, kann für den DRAM-Reset eine eigene DRAM-Reset-Logik DRL vorgesehen werden - wie in FIG 1 gestrichelt dargestellt -, die das Reset-Signal $R_U^{'}$ nur nach Unterschreitung der zur Datenerhaltung nötigen Betriebs-spannung bildet. In diesem Fall entfällt die Verbindung von der zentralen Reset-Logik RL zur DRAM-Einheit D.

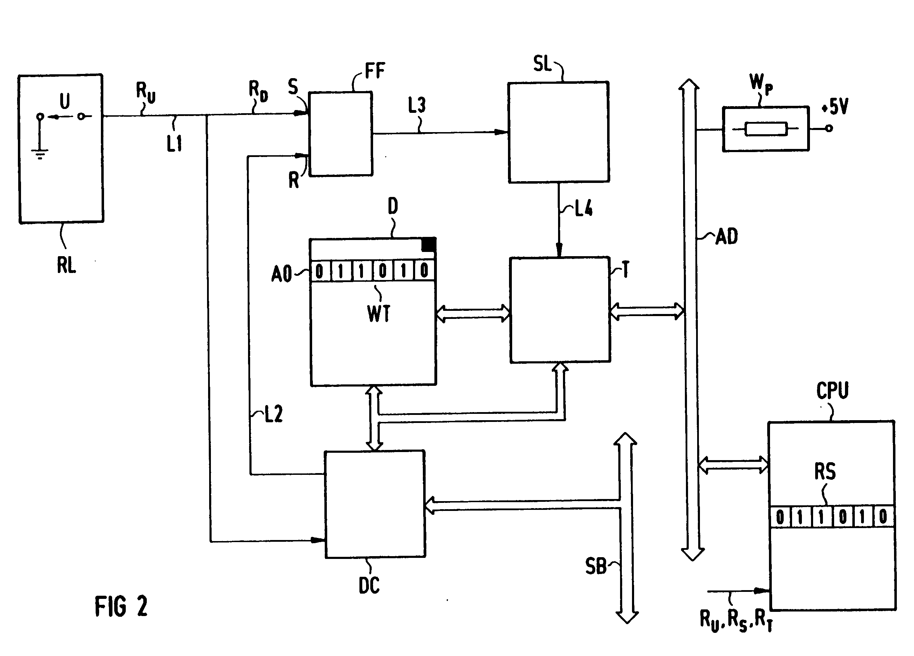

Da jedoch die Zentralrecheneinheit CPU nicht unterscheiden kann, welche Ursache das von ihr detektierte Reset-Signal $R_B$ hat, kann auch nicht unterschieden werden, ob der dynamische Schreib-Lesespeicher D nun zurückgesetzt wurde oder ob er kein Reset-Signal $R_U$ erhalten hat und somit seine Daten noch gültig sind. Zur Feststellung dieser Tatsache wird nachfolgend auf die Schaltungsanordnung gemäß FIG 2 bezug genommen, mit der die erfindungsgemäßen Verfahrensschritte durchführbar sind.

In FIG 2 ist die bereits aus FIG 1 bekannte Reset-Logik dargestellt, wobei im folgenden nur noch auf den Spannungs-Reset $R_U$ Bezug genommen wird, der beim Einschalten der Spannung oder bei Wiedereintritt der Spannungsversorgung nach einem Spannungsausfall erzeugt wird. Das Spannungs-Reset-Signal $R_U$ wird über die Leitungen L1 auf den "Setz"-Eingang S eines Flip-Flops FF geführt und parallel dazu auf den Eingang eines Controllers DC für den dynamischen Schreib-Lesespeicher D (DRAM-Controller). Eine Leitung L2 führt auf den Rücksetz-Eingang R des Flip-Flops FF. Der Ausgang des Flip-Flops FF ist über eine Leitung L3 mit dem Eingang einer Sperrlogik SL verbunden. Der Ausgang der Sperrlogik SL ist über die Leitung L4 auf den Datentreiber T geführt. Das DRAM D ist über Busleitungen mit dem Datentreiber T und dem DRAM-Controller DC verbunden. Der Datentreiber T ist mit dem Adreß- und Datenbus AD und der DRAM-Controller DC mit dem Steuerbus SB verbunden. Der Adreßund Datenbus AD weist sogenannte Pull-up-Widerstände $W_P$ auf.

Im DRAM D ist eine Testspeicherzelle AO gesondert dargestellt. In dieser Testspeicherzelle wird beim Beschreiben des DRAMs eine Testinformation WT abgelegt.

Im Betriebszustand kann über die Adreßdatenleitungen AD und über den Datentreiber T auf die Daten des DRAMS D zugegriffen werden. Wenn jedoch ein Spannungs-Reset-Signal $R_U$ vorliegt, so wird der Setzeingang des Flip-Flops FF aktiviert und über die Sperrlogik SL ein Sperrsignal an den Datentreiber T ausgegeben. Der DRAM-Controller DC erhält das Reset-Signal $R_U$ ebenfalls, das ihn über den Verlust des DRAM-Inhalts informiert. Liegt kein Reset an, werden vom Controller DRAM-Refresh-Zyklen zur Datenerhaltung erzeugt, andernfalls wird der DRAM-Speicher zurückgesetzt. Die Zentralprozessoreinheit CPU die ebenfalls das Reset-Signal empfangen hat, adressiert nach dem Reset die Testspeicherzelle $A_O$ des DRAMs D. Da jedoch der Zugriff auf das DRAM D durch die Sperrlogik SL und den Datentreiber T nicht erlaubt wird, trotzdem aber ein Lesequittierungs-Signal vom Controller erzeugt wird, übernimmt dieser die am Adreß- und Datenbus AD anstehende Information und vergleicht sie mit der bekannten Testinformation WT, die beispielweise mit der Reset-Routine aus einem anderen Speicher der Datenverarbeitungsanlage zur Verfügung gestellt wird. Falls die von der CPU gelesenen Daten nicht mit der Testinformation WT übereinstimmen, wird der dynamische Schreib-Lesespeicher D neu beschrieben und initialisiert.

Es sei an dieser Stelle darauf hingewiesen, daß, wenn der Datentreiber T lediglich gesperrt ist und damit keinen Zugriff auf den DRAM D erlaubt, der Datenbus undefinierte Zustände aufweisen kann. Diese undefinierten Daten könnten zufällig mit der Testinformation WT übereinstimmen, so daß es beim Vergleich dieser Information mit der Testinformation zu einer Fehlerkennung kommen würde. Es muß also dafür Sorge getragen werden, daß sich mindestens ein signifikantes Bit der Testinformation WT von den Datenzuständen auf dem Bus unterscheidet. Dies könnte beispielsweise durch besonders ausgeführte Datentreiberbausteine T geschehen, die beim Empfang eines Sperrsignals über die Leitung L4 einen fest vorgegebenen Datensatz auf den Adreß- und Datenbus AD geben oder durch eine solchermaßen ausgebildete Sperrlogik SL die gegebenenfalls über einen Busanschluß verfügen könnte. Es wäre auch vorstellbar, daß der DRAM-Controller eine solche fest vorgegebene Information auf den Datenbus gibt. Um jedoch herkömmliche Datentreiber verwenden zu können, und somit die Sperrlogik SL möglichst ökonomisch ausbilden zu können, kann auch softwaremäßig dafür gesorgt werden, daß auf den Datenbus definierte Signalzustände zumindest für ein oder mehrere signifikante Bits geschaffen werden. Dies läßt sich beispielsweise bei Zentralprozessoreinheiten mit Pipelinestruktur dadurch erreichen, daß der sogenannte Befehls-Speicher mit einer bestimmten Befehlsart, beispielsweise mit einem No-Operation-Befehl (NOP) geladen wird. Während also der Adressierungsbefehl für die Speicherzelle A0 des DRAMS vom Prozessor decodiert und ausgeführt wird, werden bereits die No-Operation-Befehle über den Adreß- und Datenbus AD vom Prozessor eingelesen, so daß dann, wenn das Lesefreigabe-Signal an den Prozessor gemeldet wird, die Daten des No-Operation-Befehls gelesen werden können. Dabei kann es zwar vorkommen, daß die Signale logisch "0" nicht mehr eindeutig detektierbar sind, jedoch ist der Signalzustand der Signale logisch "1" bedingt durch die Pull-up-Widerstände $W_P$ noch eindeutig, so daß der Vergleich der Testinformation WT mit dem vom Bus gelesenen Daten auf Basis der Signale logisch "1" noch eindeutig durchführbar ist.

Gleichzeitig mit dem vom Prozessor CPU ausgelösten Lesezugriffen auf das DRAM D wird über den DRAM-Controller DC und die Leitung L2 der Rücksetzeingang R des Flip-Flops FF aktiviert und das Flip-Flop FF wieder rückgesetzt, so daß über die Sperrlogik das Sperrsignal für den Datentreiber wieder freigegeben wird. Das DRAM D kann also nun vom Zentralprozessor CPU wieder neu beschrieben werden.

Falls ein Reset-Signal vorliegt, das nicht durch Spannungsausfall bzw. durch Wiedereinsetzen oder Einsetzen der Spannung bedingt ist, sondern beispielsweise auf einen Software-Reset $R_S$ oder einen Reset bei Wechsel des Betriebsmodus $R_T$ zurückgeht, bleibt das Flip-Flop FF im "Rücksetz"-Zustand und der Datentreiber D wird nicht gesperrt. Da die Zentralprozessoreinheit CPU die Ursache des Reset-Signals jedoch nicht kennt, wird von ihr dasselbe Reset-Programm wie im bisher beschriebenen Fall abgearbeitet, d.h. daß zunächst die Testspeicherzelle A0 adressiert wird, die diesmal auch tatsächlich gelesen wird, so daß die Testinformation WT über den Datentreiber T auf dem Adreß- und Datenbus zur Verfügung gestellt wird. Der jetzt durchgeführte Vergleich zwischen der bekannten Testinformation und der gelesenen Testinformation WT ergibt, daß beide Informationen identisch sind, das bedeutet, daß die Daten des DRAM-Speichers weiterhin brauchbar sind und der DRAM-Speicher nicht neu beschrieben werden muß.

Nach einer Ausbildung der Erfindung kann, wenn das DRAM neu geladen wird auch eine von der Testinformation WT verschiedene Ladeinformation in die Testspeicherzelle A0 geladen werden. Wenn nun während des Ladevorgangs ein Reset-Signal von der Zentralprozessoreinheit detektiert wird, kann anhand der Ladekennungsinformation nach der oben bereits beschriebene Verfahrensweise erkannt werden, ob der Ladevorgang bereits abgeschlossen war oder ob der Ladevorgang von neuem begonnen werden muß. Das ist dann von Bedeutung, wenn kein Spannungsreset vorlag (Nichtansprechen der Reset- und Sperrlogik) und die Zentralprozessoreinheit CPU in diesem Fall ansonsten darauf erkennen würde, daß der Speicherinhalt des DRAMs sich nicht verändert hat und dann eventuell mit einem nicht vollständig geladenen DRAM-Speicher weiterarbeiten würde.

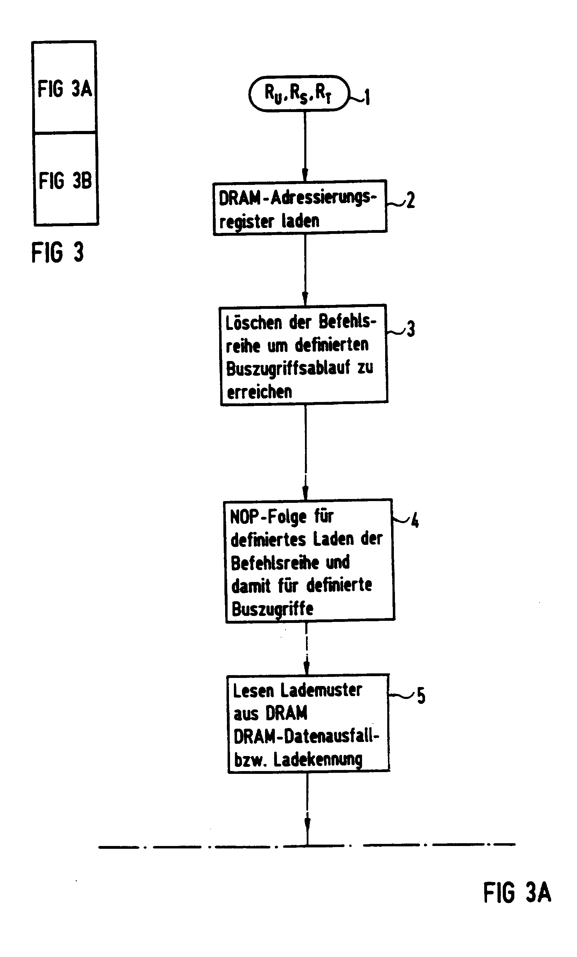

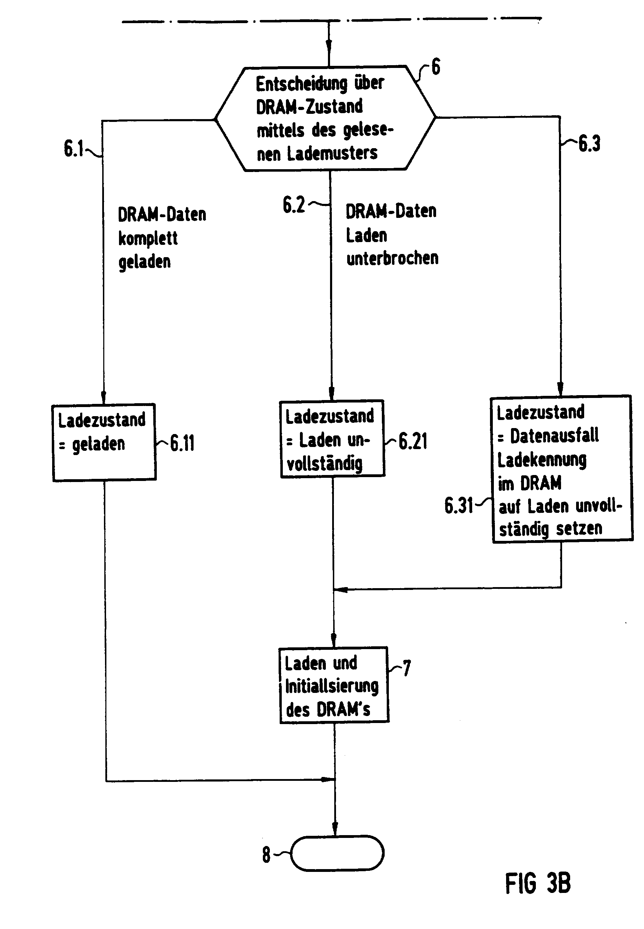

Die Verfahrensschritte werden im folgenden anhand des Signallaufplans gemäß FIG 3 beschrieben. Im 1. Schritt wird von der CPU ein Reset-Signal $R_B$ detektiert, dessen Ursache entweder ein Spannungs-Reset $R_U$, ein Software-Reset $R_S$ oder ein durch einen Wechsel der Betriebsart ausgelöster Reset $R_T$ sein kann. Im 2. Schritt wird das DRAM-Adressierungsregister geladen und im 3. Schritt die Befehlsschlange der Pipelinearchitektur gelöscht. In einem 4. Schritt wird die Befehlsschlange der Pipelinearchitektur mit No-Operation-Befehlen geladen, so daß definierte Buszustände am Datenbus AD entstehen. Im 5. Schritt wird das am Bus anliegende Datenmuster gelesen, das bei gesperrtem Datentreiber T das Muster des No-Operation-Befehls ist oder, falls der Datentreiber nicht gesperrt war, der tatsächliche Inhalt der Testspeicherzelle A0. Im 6. Schritt trifft der Prozessor eine Entscheidung über den Zustand des dynamischen Schreib-Lesespeichers durch den Vergleich des gelesenen Lademusters mit der bekannten Testinformation WT (vollständig geladen) bzw. mit der ebenfalls bekannten Ladeinformation. Im Schritt 6.1 wurde die Testinformation WT gelesen, so daß der Prozessor erkennt, daß die DRAM-Daten vollständig vorhanden sind und damit die Überprüfungs-routine beendet. Im Schritt 6.2 hat der Prozessor die Ladeinformation (Laden aktiv) aus der Testspeicherzelle gelesen und erkennt damit daß das DRAM unvollständig geladen war, so daß es neu initialisiert und geladen wird. Im Schritt 6.3 erkennt der Prozessor, daß ein spannungsbedingtes Reset-Signal $R_U$ vorgelegen hat und deshalb ein Datenausfall bezüglich der DRAM-Informationen vorliegt und das DRAM neu geladen werden muß. Zuvor wird jedoch die Testspeicherzelle wieder mit der Ladeinformation beschrieben.

**Patentansprüche**

1. Verfahren zur Reset-Erzeugung in Datenverarbeitungsanlagen, insbesondere für numerische Steuerungen, mit mindestens einem Prozessor (CPU), einem Programmspeicher (E) und einem dynamischen Schreib-Lese-Speicher (D) der über einen Datentreiber (T) an Busleitungen (AD/SB) angeschlossen ist, mit folgenden Schritten:

    1.1    der Rücksetz-Eingang (ER) des dynamischen Schreib-Lese-Speichers (D) wird nur bei Spannungsausfall aktiviert,

    1.2    in eine vorgegebene Testspeicherzelle (A0) des dynamischen Schreib-Lese-Speichers (D) wird eine der Datenverarbeitungsanlage bekannte Testinformation (WT) eingeschrieben,

    1.3    wenn der Prozessor (CPU) ein Bus-Reset-Signal ($R_B$) detektiert, wird ein Lesezugriff auf die Testspeicherzelle (A0) ausgeführt,

    1.4    wenn das Bus-Reset-Signal ($R_B$) aufgrund eines Spannungsausfalls ($R_U,R_U'$) erzeugt wurde, wird der Lesezugriff auf die Testspeicherzelle (A0) gesperrt und auf dem Datenbus eine vorgegebene, von der Testinformation (WT) abweichende Vergleichsinformation erzeugt,

    1.5    andernfalls wird der Inhalt der Testspeicherzelle (A0) gelesen,

    1.6    die nach dem Lesezugriff auf dem Datenbus vorliegende Information wird mit der bekannten Testinformation (WT) verglichen,

    1.7    bei Ungleichheit der Informationen wird der dynamische Schreib-Lesespeicher (D) neu initialisiert und beschrieben,

    1.8    bei Gleichheit der Informationen bleibt der Inhalt des dynamischen Schreib-Lesespeichers unverändert.

2. Verfahren nach Anspruch 1, wobei zur Überprüfung, ob ein Bus-Reset-Signal während des Ladens von Daten in den dynamischen Schreib-Lesespeicher erfolgte, nur für die Dauer des Ladens des dynamischen Schreib-Lesespeichers (D) in dessen Testspeicherzelle (A0) eine von der Testinformation (WT) und von der Vergleichsinformation abweichende Ladeinformation gespeichert wird.

**Claims**

1. Method for generating a reset signal in data processing equipment, in particular for numerical controls, having at least one processor (CPU), a program memory (E) and a dynamic read-write memory (D) which is connected to bus lines (AD/SB) by way of a data driver (T), having the following steps:

    1.1    the reset-input (ER) of the dynamic read-write memory (D) is only activated when there is voltage failure,

    1.2    test information (WT), which is known to the data processing equipment, is written into a preselected test memory cell (AO) of the dynamic read-write memory (D),

    1.3    if the processor (CPU) detects a bus-reset-signal ($R_B$), read access to the test memory cell (AO) is effected,

1.4 if the bus reset-signal ($R_B$) was generated on account of a voltage failure ($R_U$, $R_U'$), the read access to the test memory cell (AO) is blocked and preselected comparison information which deviates from the test information (WT) is generated on the data bus,

1.5 otherwise the contents of the test memory cell (AO) are read,

1.6 the information present on the data bus after the read access is compared with the known test information (WT),

1.7 if there is inequality of the information, the dynamic read-write memory (D) is initialized anew and written,

1.8 if there is equality of the information, the contents of the dynamic read-write memory remain unchanged.

2. Method according to claim 1, wherein for the purpose of checking whether a bus-reset-signal occurred whilst data was being loaded into the dynamic read-write memory, load information, which deviates from the test information (WT) and from the comparison information, is only stored in the test memory cell (AO) of the dynamic read-write memory (D) for the length of time during which said memory (D) is being loaded.

**Revendications**

1. Procédé de production de signaux de remise à l'état initial dans des installations de traitement de données, notamment pour des unités de commande numérique, comportant au moins un processeur (CPU), une mémoire de programme (E) et une mémoire dynamique d'enregistrement/ lecture (D), qui est raccordée à des lignes formant bus (AD/SB) par l'intermédiaire d'un étage d'attaque de transmission de données (T), comprenant les étapes suivantes

1.1 on n'active l'entrée de remise à l'état initial (ER) de la mémoire dynamique d'enregistrement-lecture (D) qu'en cas de défaillance de la tension,

1.2 on enregistre une information de test (WT), connue de l'installation de traitement de données, dans une cellule de mémoire de test (A0) prescrite de la mémoire dynamique d'enregistrement-lecture (D),

1.3 lorsque le processeur (CPU) détecte un signal de remise à l'état initial de bus ($R_B$), on effectue un accès de lecture à la cellule de mémoire de test (A0),

1.4 lorsque l'on a produit le signal de remise à l'état initial ($R_B$) en raison d'une défaillance de la tension ($R_u$, $R_u'$), on interdit l'accès de lecture à la cellule de mémoire de test (A0) et on produit une information prescrite de comparaison, qui diffère de l'information de test (WT), dans le bus de transmission de données,

1.5 sinon, on lit le contenu de la cellule de mémoire de test (A0),

1.6 on compare l'information, qui est présente après l'accès de lecture au bus de transmission de données, à l'information de test connue (WT),

1.7 en cas de non-identité des informations, on réinitialise la mémoire dynamique d'enregistrement-lecture (D) et on enregistre dans celle-ci,

1.8 en cas d'identité des informations, le contenu de la mémoire dynamique d'enregistrement-lecture reste inchangé.

2. Procédé suivant la revendication 1, selon lequel pour vérifier si le signal de remise à l'état initial de bus est apparu pendant le chargement de données dans la mémoire dynamique d'enregistrement-lecture, on ne mémorise une information de charge, qui diffère de l'information de test (WT) et de l'information de comparaison, que pendant la durée de la charge de la mémoire dynamique d'enregistrement-lecture (D), dans la cellule de mémoire de test (A0) de cette mémoire.

FIG 2

EP 0 613 077 B1

FIG 3A

FIG 3B

**FIG 3**

$$\left( R_U, R_S, R_T \right) \quad 1$$

DRAM-Adressierungs-register laden   2

Löschen der Befehls-reihe um definierten Buszugriffsablauf zu erreichen   3

NOP-Folge für definiertes Laden der Befehlsreihe und damit für definierte Buszugriffe   4

Lesen Lademuster aus DRAM DRAM-Datenausfall-bzw. Ladekennung   5

**FIG 3A**

Entscheidung über
DRAM-Zustand
mittels des gelesenen Lademusters ⌐6

6.1⌐

DRAM-Daten
komplett
geladen

6.2⌐ DRAM-Daten
Laden
unterbrochen

6.3⌐

Ladezustand
= geladen ⌐6.11

Ladezustand
= Laden unvollständig ⌐6.21

Ladezustand
= Datenausfall
Ladekennung
im DRAM
6.31⌐ auf Laden unvollständig setzen

Laden und
Initialisierung
des DRAM's ⌐7

8⌐

**FIG 3B**